# EUROPÄISCHE PATENTSCHRIFT

(11) **EP 4 355 611 B1**
(45) Veröffentlichungstag und Bekanntmachung des Hinweises auf die Patenterteilung: **12.11.2025**
(21) Anmeldenummer: 22732528.9
(22) Anmeldetag: 10.06.2022
(51) Int. Cl.: B60L 53/36, B60L 53/16, B60L 53/10, B60L 3/00, B60L 3/04, H01R 13/15, H01R 13/22, H01R 43/26, H01R 13/44, H01R 13/631, H01R 13/66

(54) **VORRICHTUNG UND VERFAHREN ZUM ANSCHLIESSEN EINES ELEKTROFAHRZEUGS MIT EINER LADESTATION UND LADESTATION**
APPARATUS AND METHOD FOR CONNECTING AN ELECTRIC VEHICLE TO A CHARGING STATION AND CHARGING STATION
DISPOSITIF ET PROCÉDÉ POUR CONNECTER UN VÉHICULE ÉLECTRIQUE À UNE STATION DE CHARGE ET STATION DE CHARGE

(30) Priorität: 17.06.2021 DE 102021206188
(43) Veröffentlichungstag der Anmeldung: 24.04.2024
(73) Patentinhaber: Robert Bosch GmbH, 70442 Stuttgart (DE)
(72) Erfinder: WOLF, Dirk, 71272 Renningen (DE); BLUM, Oliver, 71272 Renningen (DE)
(86) Internationale Anmeldenummer: PCT/EP2022/065802
(87) Internationale Veröffentlichungsnummer: WO 2022/263308

(56) Entgegenhaltungen:
- EP-A1- 2 991 188
- WO-A1-2019/220385
- WO-A1-2021/018475
- CN-A- 111 867 875
- US-A1- 2018 001 777
- US-A1- 2020 269 714

## Beschreibung

Die vorliegende Erfindung betrifft eine Vorrichtung sowie ein Verfahren zum Kontaktieren eines Elektrofahrzeugs mit einer Ladestation. Die vorliegende Erfindung betrifft ferner ein System zum Aufladen eines Elektrofahrzeugs.

### Stand der Technik

Ganz oder zumindest teilweise elektrisch angetriebene Fahrzeuge verfügen über einen elektrischen Energiespeicher, der die elektrische Energie zum Antrieb des Fahrzeugs bereitstellt. Dieser Energiespeicher wird in der Regel als Traktionsbatterie bezeichnet. Neben induktiven Ladesystemen, bei welchen die elektrische Energie mittels eines magnetischen Wechselfeldes von der Ladestation zu einer Empfangsspule in dem Elektrofahrzeug übertragen wird, existieren gegenwärtig überwiegend sogenannte konduktive Ladesysteme. Hierbei wird die Ladevorrichtung des Elektrofahrzeugs mittels einer Kabelverbindung mit einer externen Ladestation verbunden. Nach dem Verbinden wird von der Ladestation elektrische Energie bereitgestellt, um die Traktionsbatterie des Elektrofahrzeugs aufzuladen.

Die Druckschrift DE 10 2014 226 357 A1 beschreibt eine Ladestation und ein Verfahren zum automatischen Laden eines elektrischen Energiespeichers in einem Fahrzeug. Hierbei wird eine Ladestation mit einem sogenannten Laderoboter vorgeschlagen, welcher eine galvanische Verbindung zwischen der Ladestation und einer Ladebuchse eines Elektrofahrzeugs herstellen kann.

Die Druckschrift WO 2021/018475 A1 beschreibt einen Steckverbinder zum Kontaktieren eines Elektrofahrzeugs, wobei in einem Gehäuse des Steckverbinders zwischen zwei Lastkontakten ein Erdungselement angeordnet ist.

Die Druckschrift US 2018/001777 A1 beschreibt eine Vorrichtung und ein Verfahren zum automatischen Aufladen eines elektrischen Energiespeichers in einem Fahrzeug. Hierzu wird zunächst basierend auf fahrzeugspezifischen Daten die Position einer Ladebuchse an einem Fahrzeug ermittelt. Anschließend fährt ein Laderoboter auf dem Boden in die Nähe der Ladebuchse. Daraufhin stellt der Laderoboter eine galvanische Verbindung zwischen Ladestation und Ladebuchse her.

### Offenbarung der Erfindung

Die vorliegende Erfindung schafft eine Vorrichtung und ein Verfahren zum Kontaktieren eines Elektrofahrzeugs sowie System zum Aufladen eines Elektrofahrzeugs mit den Merkmalen der unabhängigen Patentansprüche. Weitere vorteilhafte Ausführungsformen sind Gegenstand der abhängigen Patentansprüche.

### Demgemäß ist vorgesehen:

Eine Vorrichtung zum Kontaktieren eines Elektrofahrzeugs mit einer Ladestation, welche eine erste Gruppe von Kontaktelementen, eine zweite Gruppe von Kontaktelementen und eine Positionierungseinrichtung umfasst. Die erste Gruppe von Kontaktelementen umfasst einen ersten Leistungsanschluss und einen ersten Messanschluss. Die zweite Gruppe von Kontaktelementen umfasst einen zweiten Leistungsanschluss, einen Schutzleiteranschluss und einen zweiten Messanschluss. Die Positionierungseinrichtung ist dazu ausgelegt, die Kontaktelemente der ersten Gruppe von Kontaktelementen mit einer ersten Kontaktfläche eines Ladepunkts zu kontaktieren. Weiterhin ist die Positionierungseinrichtung dazu ausgelegt, die Kontaktelemente der zweiten Gruppe von Kontaktelementen mit einer zweiten Kontaktfläche des Ladepunkts zu kontaktieren, wobei die Kontaktelemente für den ersten Messanschluss und den zweiten Messanschluss gegenüber den Kontaktelementen für den ersten Leistungsanschluss, den zweiten Leistungsanschluss und den Schutzleiteranschluss zurückversetzt angeordnet sind; wobei die Vorrichtung ferner eine Steuereinrichtung umfasst, die dazu ausgelegt ist, einen ersten Übergangswiderstand zwischen dem ersten Leistungsanschluss und dem ersten Messanschluss der ersten Gruppe von Kontaktelementen zu ermitteln, wenn die erste Gruppe von Kontaktelementen mit der ersten Kontaktfläche des Ladepunkts kontaktiert ist,einen zweiten Übergangswiderstand zwischen dem zweiten Leistungsanschluss und dem zweiten Messanschluss der zweiten Gruppe von Kontaktelementen zu ermitteln und einen dritten Übergangswiderstand zwischen dem Schutzleiteranschluss und dem zweiten Messanschluss der zweiten Gruppe von Kontaktelementen zu ermitteln, wenn die zweite Gruppe von Kontaktelementen mit der zweiten Kontaktfläche des Ladepunkts kontaktiert sind, und einen Ladevorgang freizugeben, falls der erste Übergangswiderstand, der zweite Übergangswiderstand und der dritte Übergangswiderstand jeweils einen vorgegebenen Grenzwert unterschreiten.

### Weiterhin ist vorgesehen:

Ein System mit einer erfindungsgemäßen Vorrichtung zum Kontaktieren des Elektrofahrzeugs mit einer Ladestation zum Aufladen eines Elektrofahrzeugs. Das Elektrofahrzeug umfasst eine erste Kontaktfläche und eine zweite Kontaktfläche. Die erste Kontaktfläche ist dazu ausgelegt, mit einem ersten Leistungsanschluss der Vorrichtung zum Kontaktieren eines Elektrofahrzeugs mit der Ladestation elektrisch verbunden zu werden. Die zweite Kontaktfläche ist dazu ausgelegt, mit einem zweiten Leistungsanschluss der Vorrichtung zum Kontaktieren eines Elektrofahrzeugs mit der Ladestation elektrisch verbunden zu werden. Die zweite Kontaktfläche ist hierbei konzentrisch um die erste Kontaktfläche angeordnet. Insbesondere ist zwischen der ersten Kontaktfläche und der zweiten Kontaktfläche ein elektrisch isolierender Ring angeordnet.

### Schließlich ist vorgesehen:

Ein Verfahren zum Kontaktieren eines Elektrofahrzeugs, das eine erfindungsgemäße Vorrichtung zum Kontaktieren des Elektrofahrzeugs mit einer Ladestation umfasst, mit einer Ladestation. Das Verfahren umfasst einen Schritt zum Kontaktieren der ersten Gruppe von Kontaktelementen mit einer ersten Kontaktfläche der Ladestation. Das Verfahren umfasst weiterhin einen Schritt zum Kontaktieren der zweiten Gruppe von Kontaktelementen mit einer zweiten Kontaktfläche der Ladestation. Das Verfahren umfasst weiter Schritte zum Überprüfen eines ersten Übergangswiderstandes zwischen dem ersten Leistungsanschluss und dem ersten Messanschluss, eines zweiten Übergangswiderstandes zwischen dem zweiten Leistungsanschluss und dem zweiten Messanschluss sowie einen dritten Übergangswiderstand zwischen dem Schutzleiteranschluss und dem zweiten Messanschluss. Schließlich umfasst das Verfahren einen Schritt zum Freigeben eines Ladevorgangs, falls die überprüften Übergangswiderstände jeweils einen vorgegebenen Grenzwert unterschreiten.

### Vorteile der Erfindung

Der vorliegenden Erfindung liegt die Erkenntnis zugrunde, dass für den Anschluss eines Elektrofahrzeugs an eine Ladestation in der Regel eine elektrische Verbindung hergestellt werden muss. Zum Herstellen dieser elektrischen Verbindung muss ein Fahrzeugführer normalerweise sein Fahrzeug verlassen und diese Verbindung manuell herstellen.

Es ist daher eine Idee der vorliegenden Erfindung, dieser Erkenntnis Rechnung zu tragen und eine sichere, zuverlässige und komfortable Möglichkeit für ein automatisches Kontaktieren eines Elektrofahrzeugs mit einer Ladestation zu schaffen. Hierzu sind an einem Elektrofahrzeug Kontaktvorrichtungen vorgesehen, welche auf einfache und zuverlässige Weise ein sicheres Kontaktieren der Ladevorrichtung in dem Elektrofahrzeug mit einer externen Ladestation ermöglichen. Insbesondere ermöglicht die vorgeschlagene Kontaktvorrichtung ein automatisches Kontaktieren des Elektrofahrzeugs mit einer externen Ladestation. Das Kontaktieren des Elektrofahrzeugs mit der Ladestation und der daraufhin startende Ladevorgang können ohne manuelle Eingriffe eines Benutzers ausgeführt werden.

Um die Zuverlässigkeit und Sicherheit bei der Kontaktierung gewährleisten zu können, ist es vorgesehen, dass neben den leistungsführenden Kontaktelementen zusätzliche Messkontaktelemente vorgesehen sind. Mittels dieser zusätzlichen Messkontaktelemente kann ein zuverlässiges Kontaktieren der fahrzeugseitigen Anschlüsse mit den elektrischen Anschlüssen der Ladestation überprüft werden. Auf diese Weise kann vor dem Start des Ladevorgangs überprüft werden, ob bei dem automatischen Kontaktieren des Elektrofahrzeugs mit der Ladestation eine sichere elektrische Verbindung hergestellt worden ist. Darüber hinaus ermöglichen die zusätzlichen Messkontakte auch während des Ladevorgangs eine kontinuierliche oder periodische Überprüfung der elektrischen Kontaktverhältnisse. Hierdurch kann während des gesamten Ladevorgangs eine ausreichend sichere elektrische Kontaktierung des Elektrofahrzeugs mit der Ladestation überprüft und gewährleistet werden. Die Kontaktelemente der Vorrichtung zum Kontaktieren des Elektrofahrzeugs mit einer Ladestation können beispielsweise an einer Unterseite des Elektrofahrzeugs vorgesehen sein. In diesem Fall kann beispielsweise die Ladestation auf dem Boden korrespondierende Kontaktstellen bereitstellen. Zum Aufladen des Elektrofahrzeugs können die Kontaktelemente der Vorrichtung zum Kontaktieren des Elektrofahrzeugs mit der Ladestation auf die Kontaktflächen der Ladestation abgesenkt werden. Beispielsweise können an den Kontaktelementen jeweils Federelemente oder Ähnliches vorgesehen sein. Auf diese Weise kann nach dem Kontaktieren der Ladestation ein ausreichend hoher Anpressdruck der Kontaktelemente auf die Kontaktflächen der Ladestation gewährleistet werden. Ferner können die Messanschlüsse ggf. gegenüber den Leistungsanschlüssen und dem Schutzleiteranschluss leicht zurückversetzt sein. Hierdurch werden bei einer Bewegung der Kontakte in Richtung der Anschlüsse der Ladestation zunächst die Leistungsanschlüsse und der Schutzleiteranschluss mit den Anschlüssen der Ladestation kontaktiert. Erst danach werden dann auch die Messanschlüsse mit den entsprechenden Anschlüssen der Ladestation kontaktiert. Wie im Nachfolgenden noch näher erläutert wird, können die Kontaktelemente darüber hinaus mittels einer geeigneten Schutzeinrichtung von einem Außenbereich abgeschirmt werden.

Zum Überprüfen einer zuverlässigen elektrischen Verbindung der Kontaktelemente mit den Kontaktflächen der Ladestation kann beispielsweise zwischen den Messanschlüssen und den Leistungsanschlüssen eine elektrische Spannung angelegt werden. Durch Auswerten des sich hierbei einstellenden elektrischen Stroms können elektrische Eigenschaften wie Übergangs- und/oder Isolationswiderstände ermittelt werden. Auf diese Weise kann beispielsweise eine unzureichende elektrische Kontaktierung detektiert werden. Zum Beispiel kann eine Verschmutzung oder eine fehlerhafte Positionierung des Fahrzeugs über den Kontaktflächen zu einer schlechten oder fehlerhaften Kontaktierung führen. Dies kann durch eine initiale Überprüfung mittels den Messanschlüssen überprüft werden.

Die Vorrichtung zum Kontaktieren des Elektrofahrzeugs und die hierzu korrespondierende Ladestation ermöglichen somit eine einfache, komfortable und sichere elektrische Kontaktierung des Elektrofahrzeugs zum Aufladen des Elektrofahrzeugs.

Die Vorrichtung zum Kontaktieren eines Elektrofahrzeugs umfasst ferner eine Steuereinrichtung. Die Steuereinrichtung ist dazu ausgelegt, einen ersten Übergangswiderstand zwischen dem ersten Leistungsanschluss und dem ersten Messanschluss der ersten Gruppe von Kontaktelementen zu ermitteln. Insbesondere kann der erste Übergangswiderstand ermittelt werden, nachdem die erste Gruppe von Kontaktelementen mit der ersten Kontaktfläche des Ladepunktes kontaktiert worden ist. Die Steuereinrichtung kann ferner einen zweiten Übergangswiderstand zwischen dem zweiten Leistungsanschluss und dem zweiten Messanschluss der zweiten Gruppe von Kontaktelementen ermitteln. Weiterhin kann die Steuereinrichtung einen dritten Übergangswiderstand zwischen dem

Schutzleiteranschluss und dem zweiten Messanschluss der zweiten Gruppe von Kontaktelementen ermitteln. Das Ermitteln des zweiten und dritten Übergangswiderstands kann insbesondere erfolgen, nachdem die zweite Gruppe von Kontaktelementen mit der zweiten Kontaktfläche des Ladepunkts kontaktiert worden ist. Nachdem die Übergangswiderstände ermittelt worden sind, kann die Steuereinrichtung den Ladevorgang freigeben, falls der erste, der zweite und der dritte Übergangswiderstand jeweils einen vorgegebenen Grenzwert unterschreiten. Die Grenzwerte für den ersten, zweiten und dritten Übergangswiderstand können beispielsweise alle gleich groß definiert werden. Gegebenenfalls können jedoch auch für die drei Übergangswiderstände individuelle Grenzwerte vorgegeben sein. Beispielsweise kann für den Übergangswiderstand des Schutzleiteranschlusses ein Grenzwert vorgegeben sein, welcher geringer ist als die Übergangswiderstände, welche für die Leistungsanschlüsse vorgesehen sind. Als Grenzwerte für die Übergangswiderstände können beispielsweise einige Milliohm bis hin zu einigen hundert Milliohm vorgegeben werden. Grundsätzlich sind jedoch je nach Anwendungsfall auch hiervon abweichende Grenzwerte möglich.

Das Überprüfen der Übergangswiderstande kann beispielsweise durch Anlegen einer elektrischen Spannung zwischen dem Messanschluss und dem jeweils korrespondierenden Leistungs- bzw. Schutzleiteranschluss erfolgen. Entsprechend kann durch das Messen des sich hierbei einstellenden elektrischen Stroms der jeweilige Übergangswiderstand errechnet werden. Alternativ kann zwischen dem Messanschluss und dem zu überprüfenden Leistungs- bzw. Schutzleiteranschluss ein Prüfstrom, insbesondere ein spannungsbegrenzter Prüfstrom, angelegt werden. In diesem Fall kann durch das Auswerten der sich hierbei einstellenden elektrischen Spannung ebenfalls der jeweilige Übergangswiderstand errechnet werden. Ist die Vorrichtung zum Kontaktieren des Elektrofahrzeugs mit der Ladestation unzureichend über den Kontaktflächen der Ladestation positioniert oder befindet sich beispielsweise eine Verschmutzung auf einer der Kontaktflächen, oder ist zum Beispiel eines der Kontaktelemente beschädigt oder verschmutzt, so kann dies durch eine entsprechende Messung des Übergangswiderstands detektiert werden. In einem solchen Fall kann der Ladevorgang unterbunden werden.

Gemäß einer Ausführungsform ist die Steuereinrichtung dazu ausgelegt, die Übergangswiderstände während eines Ladevorgangs zu überprüfen. Entsprechend kann die Steuereinrichtung dazu ausgelegt sein, den Ladevorgang zu unterbrechen, falls mindestens einer der ermittelten Übergangswiderstände den jeweils vorgegebenen Grenzwert überschreitet. Durch das kontinuierliche oder periodische Überprüfen der Übergangswiderstände während des Ladevorgangs kann sichergestellt werden, dass auch während des gesamten Ladevorgangs eine ausreichend gute elektrische Kontaktierung zwischen dem Elektrofahrzeug und der Ladestation bestehen bleibt. Wird beispielsweise aufgrund eines Unfalls oder Ähnlichem das Fahrzeug von den Kontaktflächen der Ladestation weg geschoben oder gekippt, so kann dies durch eine Erhöhung der überwachten Übergangswiderstände sofort detektiert werden. In diesem Fall kann der Ladevorgang gestoppt werden, um weitere Gefahren oder Beschädigungen zu verhindern. Gemäß einer Ausführungsform ist die Steuereinrichtung dazu ausgelegt, einen Isolationswiderstand zwischen dem ersten Messanschluss der ersten Gruppe von Kontaktelementen und dem zweiten Messanschluss der zweiten Gruppe von Kontaktelementen zu ermitteln. Die Steuervorrichtung kann hierbei den Ladevorgang freigeben, falls der ermittelte Isolationswiderstand einen vorgegebenen Grenzwert überschreitet. Andernfalls, falls der Isolationswiderstand den vorgegebenen Grenzwert nicht überschreitet, kann ein Ladevorgang unterbunden werden. Auch dieser Isolationswiderstand kann einerseits vor Beginn des Ladevorgangs und gegebenenfalls auch während des Ladevorgangs überprüft werden. Durch die Überprüfung des Isolationswiderstandes kann sichergestellt werden, dass zwischen den Kontaktflächen der Ladestation sich kein Kurzschluss oder ein Kriechstrom einstellt. Als Grenzwert für den Isolationswiderstand kann beispielsweis ein Wert von einigen Megaohm vorgegeben werden.

Gemäß einer Ausführungsform ist die Steuereinrichtung dazu ausgelegt, den Ladestrom während des Ladevorgangs zu überwachen. Entsprechend kann die Steuereinrichtung dazu ausgelegt sein, den Ladevorgang zu unterbrechen, falls der Ladestrom einen vorgegebenen minimalen Ladestrom unterschreitet. Wird das Fahrzeug, beispielsweise aufgrund eines Unfalls oder Ähnlichem, verschoben, so kann dies zu einer Verringerung oder Unterbrechung des Ladestroms führen. In einem solchen Fall kann der Ladevorgang möglichst unmittelbar gestoppt werden, um weitere Gefahren oder Beschädigungen zu verhindern.

Gemäß einer Ausführungsform umfasst die Vorrichtung zum Kontaktieren des Elektrofahrzeugs mit der Ladestation eine Schutzeinrichtung. Die Schutzeinrichtung ist dazu ausgelegt, einen Bereich zwischen dem Elektrofahrzeug und der Ladestation, insbesondere den Kontaktflächen der Ladestation, in welchen die erste Gruppe von Kontaktelementen und die zweite Gruppe von Kontaktelementen angeordnet sind, zu umschließen. Insbesondere kann die Schutzeinrichtung diesen Bereich umschließen, wenn die erste und die zweite Gruppe von Kontaktelementen mit den Kontaktflächen des Ladepunkts kontaktiert sind. Bei dieser Schutzeinrichtung kann es sich zum Beispiel um einen Faltenbalg oder Ähnliches handeln. Darüber hinaus sind selbstverständlich auch beliebige andere geeignete Vorrichtungen möglich, welche die Komponenten der Vorrichtung zum Kontaktieren des Elektrofahrzeugs mit der Ladestation und die Kontaktflächen der Ladestation vor der Umgebung mechanisch abschirmen. Auf diese Weise kann eine Berührung von spannungsführenden Teilen während des Ladevorgangs verhindert werden. Darüber hinaus kann während des Ladevorgangs verhindert werden, dass Schmutz oder andere Gegenstände in diesen Bereich während des Ladevorgangs eindringen.

Gemäß einer Ausführungsform kann die Vorrichtung zum Kontaktieren eines Elektrofahrzeugs mit der Ladestation eine Kontrolleinrichtung umfassen. Die Kontrolleinrichtung ist dazu ausgelegt, den Ladevorgang nur dann freizugeben, falls die Schutzeinrichtung den Bereich zwischen dem Elektrofahrzeug und der Ladestation, in welchem die erste Gruppe von Kontaktelementen und die zweite Gruppe von Kontaktelementen angeordnet sind, umschlossen hat. Bei dieser Kontrolleinrichtung kann es sich beispielsweise um einen oder mehrere Kontrollschalter handeln. Diese Schalter können beispielsweise ihren Schaltzustand ändern, wenn die Schutzeinrichtung den zu schützenden Bereich vollständig abgeschirmt hat. Zum Beispiel kann der Schalter oder können die Schalter ihren Schaltzustand ändern, nachdem ein Faltenbalg vollständig ausgefahren ist. Auf diese Weise kann überprüft werden, ob der Bereich mit den während des Ladevorgangs spannungsführenden Komponenten vor der Umgebung zuverlässig abgeschirmt ist.

Gemäß einer Ausführungsform umfasst die Vorrichtung zum Kontaktieren des Elektrofahrzeugs mit der Ladestation eine Kommunikationseinrichtung. Die Kommunikationseinrichtung ist dazu ausgelegt. über die Kontaktelemente des ersten Messanschlusses und des zweiten Messanschlusses eine Kommunikationsverbindung zwischen dem Elektrofahrzeug und der Ladestation bereitzustellen. Über diese Kommunikationsverbindung können beispielsweise Informationen für den Ladevorgang ausgetauscht werden. Zum Beispiel kann über eine solche Kommunikationsverbindung eine Freigabe zum Start des Ladevorgangs übermittelt werden. Darüber hinaus können über diese Kommunikationsverbindung Informationen zur Autorisierung, zur Abrechnung oder zum Austausch von Daten für den Ladevorgang, wie beispielsweise Ladespannung, maximaler Ladestrom oder Ähnliches ausgetauscht werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Fig. 1:: eine schematische Darstellung einer Vorrichtung zum Kontaktieren eines Elektrofahrzeugs gemäß einer Ausführungsform;
- Fig. 2:: eine schematische Darstellung einer Unterbodenansicht eines Elektrofahrzeugs mit einer Vorrichtung zum Kontaktieren des Elektrofahrzeugs mit einer Ladestation gemäß einer Ausführungsform;
- Fig. 3:: eine schematische Darstellung einer Ladestation gemäß einer Ausführungsform; und
- Fig. 4:: ein Ablaufdiagramm, wie es einem Verfahren zum Kontaktieren eines Elektrofahrzeugs mit einer Ladestation zugrunde liegt.

### Beschreibung von Ausführungsformen

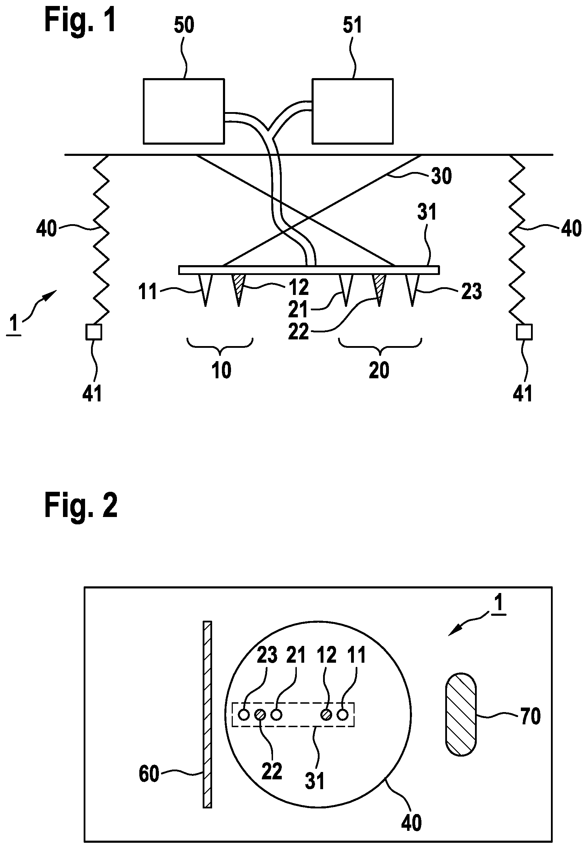

Figur 1 zeigt eine schematische Darstellung einer Vorrichtung 1 zum Kontaktieren eines Elektrofahrzeugs mit einer Ladestation. Wie in dieser Darstellung zu erkennen ist, kann die Vorrichtung 1 zum Kontaktieren des Elektrofahrzeugs mit der Ladestation vorzugsweise auf der Unterseite eines Elektrofahrzeugs angeordnet werden. Die Vorrichtung 1 zum Kontaktieren des Elektrofahrzeugs mit der Ladestation umfasst eine erste Gruppe 10 von Kontaktelementen mit einem ersten Leistungsanschluss 11 und einem ersten Messanschluss 12. Weiterhin umfasst die Vorrichtung 1 eine zweite Gruppe 20 von Kontaktelementen mit einem zweiten Leistungsanschluss 21, einem zweiten Messanschluss 22 und einem Schutzleiteranschluss 23. Bei den Kontaktelementen 11, 12, 21, 22, 23 kann es sich um elektrisch leitfähige Kontaktelemente handeln, welche mit einer vorgegebenen Kraft auf korrespondierende Kontaktflächen einer Ladestation gedrückt werden können. Hierzu können an den einzelnen Kontaktelementen 11, 12, 21, 22, 23 beispielsweise Federelemente oder Ähnliches vorgesehen sein, welche während des Kontaktierens mit der Ladestation eine ausreichende Kraft auf die Kontaktflächen der Ladestation ausüben.

Gegebenenfalls sind die Kontaktelemente für den ersten Messanschluss 12 und den zweiten Messanschluss 22 gegenüber den Kontaktelementen für den ersten Leistungsanschluss 11, den zweiten Leistungsanschluss 22 und den Schutzleiteranschluss 23 zurückversetzt. Entsprechend werden während des Kontaktierungsvorgangs, bei welchem die Kontaktelemente 11, 12, 21, 22, 23 in Richtung der Kontaktflächen der Ladestation bewegt werden, zunächst die Kontaktelemente des ersten Leistungsanschlusses 11, des zweiten Leistungsanschlusses 21 und des Schutzleiteranschlusses 23 mit den Kontaktflächen kontaktiert und erst danach findet die Kontaktierung des ersten Messanschlusses 12 und des zweiten Messanschlusses 22 statt.

Die Kontaktelemente 11, 12, 21, 22, 23 können beispielsweise auf einer gemeinsamen Trägereinrichtung 31 angeordnet sein. Eine Positionierungseinrichtung 30 kann die Kontaktelemente 11, 12, 21, 22, 23 und insbesondere die Trägereinrichtung 31 von der Ruheposition am oder im Fahrzeug in Richtung der Kontaktflächen der Ladestation bewegen. Hierzu ist grundsätzlich jede geeignete Positionierungseinrichtung 30 möglich, welche eine entsprechende Bewegung ausführen kann. Zum Beispiel kann es sich bei der Positionierungseinrichtung 30 um eine Mechanik handeln, welche mittels eines Elektromotors abgesenkt oder angehoben werden kann.

Obwohl in der in Figur 1 dargestellten Ausführungsform der Vorrichtung 1 zum Kontaktieren des Elektrofahrzeugs mit der Ladestation jeweils nur ein einzelnes Kontaktelement für den ersten Leistungsanschluss 11, den ersten Messanschluss 12, den zweiten Leistungsanschluss 21, den zweiten Messanschluss 22 und den Schutzleiteranschluss 23 dargestellt sind, ist es auch möglich, dass eines, mehrere oder alle Kontaktelemente auch mehrfach vorgesehen sind.

Die Vorrichtung 1 zum Kontaktieren des Elektrofahrzeugs mit der Ladestation umfasst in der in Figur 1 dargestellten Ausführungsform eine Schutzeinrichtung 40. Diese Schutzeinrichtung 40 kann einen Bereich zwischen der Unterseite des Elektrofahrzeugs und dem Boden, an welchem sich die Kontaktflächen der Ladestation befinden, und in welchem die Kontaktelemente 11, 12, 21, 22, 23 abgesenkt werden, vor der Umgebung abschirmt. Zum Beispiel kann es sich bei der Schutzeinrichtung 40 um einen Faltenbalg oder Ähnliches handeln. Diese Schutzeinrichtung 40 kann beispielsweise an der Trägereinrichtung 31 der Positionierungseinrichtung 30 angeordnet sein. Entsprechend wird mit dem Absenken dieser Komponente auch die Schutzeinrichtung 40 abgesenkt und umschließt einen Bereich, innerhalb dessen sich die Kontaktelemente 11, 12, 21, 22, 23 befinden.

Alternativ ist es auch möglich, dass die Schutzeinrichtung 40 separat abgesenkt bzw. ausgefahren werden kann. Beispielsweise kann die Schutzeinrichtung 40 vorab in einem ersten Schritt den Bereich zwischen dem Fahrzeug und dem Boden mit den Kontaktflächen der Ladestation abschirmen. Daraufhin kann in einem weiteren Schritt die Positionierungseinrichtung 30 ausfahren und die Kontaktelemente 11, 12, 21, 22, 23 mit den korrespondierenden Kontaktflächen der Ladestation verbinden.

Die Schutzeinrichtung 40 kann beispielsweise eine oder mehrere Kontrolleinrichtungen 41 umfassen. Diese Kontrolleinrichtungen 41 detektieren, ob die Schutzeinrichtung 40 vollständig bzw. korrekt ausgefahren ist und den Innenraum mit den Kontaktelementen 11, 12, 21, 22, 23 abschirmt. Beispielsweise kann es sich bei den Elementen der Kontrolleinrichtung 41 um Schalter handeln, welche ihren Schaltzustand nach dem vollständigen Ausfahren ändern. In diesem Fall kann die Kontrolleinrichtung 41 einen Ladevorgang nur dann freigeben, wenn die Schutzeinrichtung 40 korrekt bzw. vollständig ausgefahren ist. Andernfalls kann ein Ladevorgang unterbunden werden. Auf diese Weise kann ein Eindringen von Fremdkörpern sowie eine absichtliche oder versehentliche Berührung von spannungsführenden Teilen durch einen Menschen oder ein Tier verhindert werden.

Nachdem die Positionierungseinrichtung 30 die Kontaktelemente 11, 12, 21, 22, 23 auf die Kontaktflächen der Ladestation abgesenkt hat, können zunächst vorgegebene Bedingungen überprüft werden, bevor ein Ladevorgang freigegeben wird und hierzu die Ladestation eine elektrische Spannung zwischen den Kontaktflächen am Boden anlegt. Diese vorgegebenen Bedingungen können beispielsweise mittels einer Steuereinrichtung 50 überprüft werden.

Beispielsweise kann ein elektrischer Widerstand zwischen dem ersten Leistungsanschluss 11 und dem ersten Messanschluss 12 ermittelt werden. Dieser Übergangswiderstand ergibt sich einerseits aus dem Übergangswiderstand zwischen dem ersten Leistungsanschluss 11 und einer Kontaktfläche, auf welche der erste Leistungsanschluss 11 abgesenkt worden ist und zusätzlich aus dem Übergangswiderstand zwischen dieser Kontaktfläche und dem ersten Messanschluss 12. Beispielsweise kann die Steuereinrichtung 50 eine elektrische Prüfspannung zwischen dem ersten Leistungsanschluss 11 und dem ersten Messanschluss 12 anlegen und einen sich daraufhin einstellenden elektrischen Strom messen. Somit ergibt sich der Übergangswiderstand aus dem Quotient der elektrischen Spannung und dem gemessenen Strom. Ist der elektrische Übergangswiderstand aufgrund einer Verschmutzung oder eines Fremdkörpers zwischen einem Kontaktelement 11, 12 und der Kontaktfläche der Ladestation erhöht, so kann in diesem Fall ein Start des Ladevorgangs unterbunden werden. Gegebenenfalls kann eine entsprechende Fehlermeldung ausgegeben werden. Beispielsweise kann eine solche Fehlermeldung auf einer Anzeigeeinheit im Fahrzeug dem Fahrzeugführer angezeigt werden.

Auf gleiche Weise kann auch ein Übergangswiderstand in dem Strompfad zwischen dem zweiten Leistungsanschluss 21 und dem zweiten Messanschluss 22 ermittelt bzw. überprüft werden. Ebenfalls kann ein weiterer Übergangswiderstand zwischen dem Schutzleiteranschluss 23 und dem zweiten Messanschluss 22 überprüft werden.

Weiterhin kann beispielsweise auch ein Isolationswiderstand zwischen dem ersten Messanschluss 12 und dem zweiten Messanschluss 22 ermittelt werden. Dieser Isolationswiderstand entspricht dem Isolationswiderstand zwischen den beiden Kontaktflächen der Ladestation, welche während des Ladevorgangs die elektrische Ladespannung bereitstellen. Unterschreitet dieser Isolationswiderstand einen vorgegebenen Grenzwert, so besteht die Gefahr eines Kurzschlusses oder zumindest eines unerwünscht hohen Kriechstromes. Um dies zu verhindern, kann beim Unterschreiten eines vorgegebenen Grenzwertes für den Isolationswiderstand der Ladevorgang ebenfalls unterbunden werden.

Nachdem die Übergangswiderstände oder zusätzlich der Isolationswiderstand überprüft worden sind und festgestellt wurde, dass die vorgegebenen Grenzwerte eingehalten sind, kann ein Ladevorgang freigegeben werden. Hierzu kann beispielsweise eine entsprechende Signalisierung von dem Elektrofahrzeug, insbesondere von der Steuereinrichtung 50 an die Ladestation übertragen werden. Darüber hinaus können auch weitere Informationen, wie beispielsweise Angaben über den Ladevorgang, zum Beispiel Vorgaben für den Ladestrom, die Ladespannung, eine angeforderte Energiemenge oder Ähnliches, übertragen werden. Weiterhin können beispielsweise auch Identifikations- und/oder Authentifizierungsinformationen von dem Fahrzeug an die Ladestation übertragen werden.

Zur Übertragung von Informationen vom Fahrzeug an die Ladestation kann beispielsweise eine Kommunikationseinrichtung 51 vorgesehen sein. Diese Kommunikationseinrichtung 51 kann Informationen beispielsweise über eine kabellose Funkverbindung an die Ladestation übertragen und/oder Informationen von der Ladestation empfangen. Alternativ kann die Kommunikationseinrichtung 51 eine Kommunikationsverbindung über den ersten Messanschluss 12 und/oder den zweiten Messanschluss 22 zur Ladestation aufbauen.

Nachdem der Ladevorgang freigegeben worden ist, kann die Ladestation eine elektrische Spannung zwischen den Kontaktflächen bereitstellen. Hierauf kann über den ersten Leistungsanschluss 11 und den zweiten Leistungsanschluss 21 elektrische Energie an das Elektrofahrzeug zum Aufladen der Traktionsbatterie übertragen werden. Hierbei kann über den Schutzleiteranschluss 23 das Elektrofahrzeug mit einem Bezugspotential verbunden werden.

Während des Ladevorgangs kann die Steuereinrichtung 50 kontinuierlich oder in vorgegebenen Zeitintervallen die Übergangswiderstände zwischen dem ersten Leistungsanschluss 11 und dem ersten Messanschluss 12 sowie zwischen dem zweiten Leistungsanschluss 21 und dem zweiten Messanschluss 22 und ferner zwischen dem zweiten Messanschluss 22 und dem Schutzleiteranschluss 23 überprüfen. Dies kann beispielsweise durch Messung einer Spannungsdifferenz zwischen dem ersten Leistungsanschluss 11 und dem ersten Messanschluss 12 bzw. dem zweiten Leistungsanschluss 21 und dem zweitem Messanschluss 22 erfolgen. Alternativ kann zwischen dem jeweiligen Messanschluss 12, 22 und dem zu überprüfenden Leistungs- bzw. Schutzleiteranschlüssen 11, 21, 23 ein Prüfstrom, insbesondere ein spannungsbegrenzter Prüfstrom, angelegt werden. Hierbei kann durch das Erfassen der sich hierbei einstellenden elektrischen Spannung ebenfalls der jeweilige Übergangswiderstand errechnet werden.

Ferner ist es ebenso möglich, während des Ladevorgangs den Isolationswiderstand zwischen dem ersten Messanschluss und dem zweiten Messanschluss zu überwachen. Überschreiten die überwachten Übergangswiderstände einen vorgegebenen Grenzwert oder unterschreitet der überwachte Isolationswiderstand einen vorgegebenen Schwellwert, so kann der Ladevorgang gestoppt werden und die Ladestation dazu veranlasst werden, die elektrische Spannung an den Kontaktflächen abzuschalten.

Darüber hinaus kann auch ein Ladestrom überwacht werden. Sinkt der Ladestrom unterhalb einen vorgegebenen Grenzwert, so kann dies ebenfalls ein Indiz für eine Unregelmäßigkeit sein. Entsprechend kann auch in diesem Fall der Ladevorgang unterbrochen werden.

Figur 2 zeigt eine schematische Darstellung einer Ansicht auf ein Elektrofahrzeug mit einer Vorrichtung 1 zum Kontaktieren des Elektrofahrzeugs mit einer Ladestation von unten. Zum Schutz der Vorrichtung 1 zum Kontaktieren des Elektrofahrzeugs mit der Ladestation kann die Vorrichtung 1 beispielsweise in einer Vertiefung im Unterboden des Fahrzeugs vorgesehen sein. Gegebenenfalls kann die Vertiefung mit der Vorrichtung 1 mittels einer geeigneten Abdeckung 60, beispielsweise einer Klappe oder eines Rollladens verschlossen werden. Für das Kontaktieren kann diese Abdeckung 60 geöffnet werden. Anschließend können die Kontaktelemente 11, 12, 21, 22, 23 abgesenkt werden, um mit den entsprechenden Kontaktflächen der Ladestation elektrisch verbunden zu werden.

Ferner kann beispielsweise eine Reinigungseinrichtung 70 vorgesehen sein. Diese Reinigungseinrichtung 70 kann beispielsweise vor dem Absenken der Kontaktelemente 11, 12, 21, 22, 23 die Kontaktelemente und/oder die Kontaktflächen der Ladestation reinigen. Beispielsweise kann hierzu eine Reinigung mittels Druckluft oder einer geeigneten Reinigungsflüssigkeit vorgesehen sein. Darüber hinaus ist jedoch beispielsweise eine mechanische Reinigungseinrichtung 70 oder jede andere geeignete Art von Reinigungseinrichtung möglich.

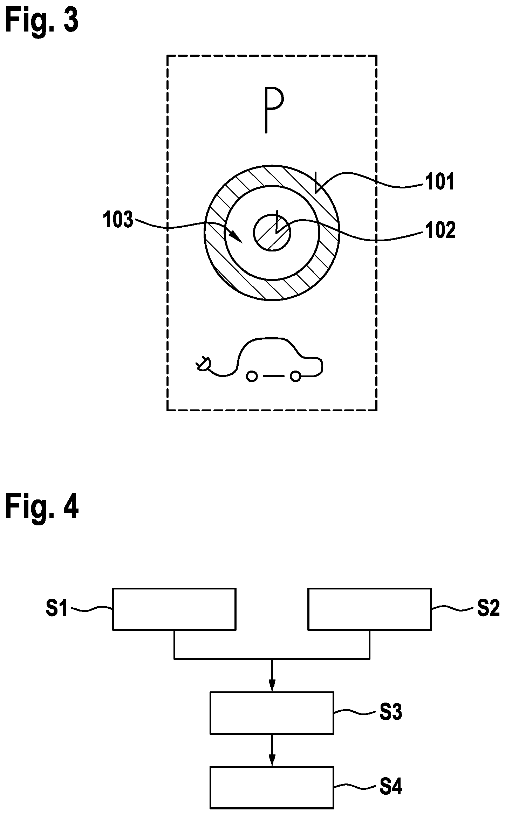

Figur 3 zeigt eine schematische Darstellung einer Draufsicht auf die Kontaktflächen einer Ladestation, wie sie zum Kontaktieren mit einer zuvor beschriebenen Vorrichtung 1 zum Kontaktieren des Elektrofahrzeugs mit der Ladestation geeignet ist. Die Ladestation kann hierzu eine erste Kontaktfläche 101 und eine zweite Kontaktfläche 102 aufweisen. In der hier dargestellten Ausführungsform ist die zweite Kontaktfläche 102 konzentrisch um die erste Kontaktfläche 101 herum angeordnet. Zwischen der ersten Kontaktfläche 101 und der zweiten Kontaktfläche 102 befindet sich ein Isolationsbereich 103. Eine solche konzentrische Anordnung der Kontaktflächen 101, 102 kann beispielsweise in einem mittleren Bereich einer Parkfläche vorgesehen sein. Durch eine solche konzentrische Anordnung der Kontaktflächen im mittleren Bereich einer Parkfläche ist eine nahezu beliebige Positionierung des Fahrzeugs auf der Parkfläche möglich. Insbesondere ermöglicht eine solche konzentrische Anordnung der Kontaktflächen die Nutzung der Ladestation unabhängig davon, ob ein Fahrzeug vorwärts, rückwärts oder seitlich eingeparkt wird.

Nach der Freigabe des Ladevorgangs durch die Vorrichtung 1 zur Kontaktierung des Elektrofahrzeugs mit der Ladestation kann die Ladestation daraufhin zwischen der ersten Kontaktfläche 101 und der zweiten Kontaktfläche 102 eine Ladespannung, beispielsweise eine elektrische Wechselspannung bereitstellen. Grundsätzlich ist jedoch auch eine zum Aufladen des Elektrofahrzeugs geeignete elektrische Gleichspannung zwischen der ersten Kontaktfläche 101 und der zweiten Kontaktfläche 102 möglich.

Für eine sichere und fehlertolerante Kontaktierung des Elektrofahrzeugs mit der Ladestation können die Kontaktflächen 101 und 102 ausreichend groß dimensioniert werden. Beispielsweise kann der Außendurchmesser der zweiten Kontaktfläche 102 einen Durchmesser von mindestens 50 cm, 1 m oder 1,5 m aufweisen.

Figur 4 zeigt ein Ablaufdiagramm, wie es einem Verfahren zum Kontaktieren eines Elektrofahrzeugs mit einer Ladestation gemäß einer Ausführungsform zugrunde liegt.

In Schritt S1 erfolgt das Kontaktieren einer ersten Gruppe 10 von Kontaktelementen mit einer ersten Kontaktfläche 101 der Ladestation. Die erste Gruppe 10 von Kontaktelementen umfasst einen ersten Leistungsanschluss 11 und einen ersten Messanschluss 12.

In Schritt S2 erfolgt das Kontaktieren einer zweiten Gruppe 20 von Kontaktelementen mit einer zweiten Kontaktfläche 102 der Ladestation. Die zweite Gruppe 20 von Kontaktelementen umfasst einen zweiten Leistungsanschluss 21, einen Schutzleiteranschluss 23 und einen zweiten Messanschluss 22.

In Schritt S3 erfolgt ein Überprüfen von Übergangswiderständen zwischen dem ersten Leistungsanschluss 11 und dem ersten Messanschluss 12, zwischen dem zweiten Leistungsanschluss 21 und dem zweiten Messanschluss 22 und zwischen dem Schutzleiteranschluss 23 und dem zweiten Messanschluss 22.

In Schritt S4 schließlich erfolgt das Freigeben eines Ladevorgangs, falls die überprüften Übergangswiderstände jeweils einen vorgegebenen Grenzwert unterschreiten.

Zusammenfassend betrifft die vorliegende Erfindung eine Vorrichtung und ein Verfahren zum Kontaktieren eines Elektrofahrzeugs mit einer Ladestation sowie eine hierzu korrespondierende Ladestation. Das Kontaktieren des Elektrofahrzeugs mit der Ladestation kann durch automatisches Absenken von Kontaktelementen des Elektrofahrzeugs auf korrespondierende Kontaktflächen der Ladestation erfolgen. Für eine Überprüfung der zuverlässigen Kontaktierung des Elektrofahrzeugs mit der Ladestation sind zusätzlich Messkontakte vorgesehen. Mittels dieser Messkontakte kann vor der Freigabe des Ladevorgangs eine zuverlässige Kontaktierung der Anschlüsse des Elektrofahrzeugs und mit den Kontaktflächen der Ladestation überprüft.

## Patentansprüche

1. Vorrichtung (1) zum Kontaktieren eines Elektrofahrzeugs mit einer Ladestation, mit:
einer ersten Gruppe (10) von Kontaktelementen, wobei die erste Gruppe (10) von Kontaktelementen einen ersten Leistungsanschluss (11) und einen ersten Messanschluss (12) umfassen;
einer zweiten Gruppe (20) von Kontaktelementen, wobei die zweite Gruppe (20) von Kontaktelementen einen zweiten Leistungsanschluss (21), einen Schutzleiteranschluss (23) und einen zweiten Messanschluss (22) umfassen; und
einer Positionierungseinrichtung (30), die dazu ausgelegt ist, die Kontaktelemente der ersten Gruppe (10) von Kontaktelementen mit einer ersten Kontaktfläche (101) eines Ladepunkts der Ladestation zu kontaktieren und die Kontaktelemente der zweiten Gruppe (20) von Kontaktelementen mit einer zweiten Kontaktfläche (102) des Ladepunkts der Ladestation zu kontaktieren,
wobei die Kontaktelemente für den ersten Messanschluss (12) und den zweiten Messanschluss (22) gegenüber den Kontaktelementen für den ersten Leistungsanschluss (11), den zweiten Leistungsanschluss (22) und den Schutzleiteranschluss (23) zurückversetzt angeordnet sind
wobei die Vorrichtung (1) ferner eine Steuereinrichtung (50) umfasst, die dazu ausgelegt ist, einen ersten Übergangswiderstand zwischen dem ersten Leistungsanschluss (11) und dem ersten Messanschluss (12) der ersten Gruppe (10) von Kontaktelementen zu ermitteln, wenn die erste Gruppe (10) von Kontaktelementen mit der ersten Kontaktfläche (101) des Ladepunkts kontaktiert ist, einen zweiten Übergangswiderstand zwischen dem zweiten Leistungsanschluss (21) und dem zweiten Messanschluss (22) der zweiten Gruppe (20) von Kontaktelementen zu ermitteln und einen dritten Übergangswiderstand zwischen dem Schutzleiteranschluss (23) und dem zweiten Messanschluss (22) der zweiten Gruppe (20) von Kontaktelementen zu ermitteln, wenn die zweite Gruppe (20) von Kontaktelementen mit der zweiten Kontaktfläche (102) des Ladepunkts kontaktiert sind, und einen Ladevorgang freizugeben, falls der erste Übergangswiderstand, der zweite Übergangswiderstand und der dritte Übergangswiderstand jeweils einen vorgegebenen Grenzwert unterschreiten.

2. Vorrichtung (1) nach Anspruch 1, wobei die Steuereinrichtung (50) dazu ausgelegt ist, die Übergangswiderstände während eines Ladevorgangs zu überprüfen und den Ladevorgang zu unterbrechen, falls mindestens einer der ermittelten Übergangswiderstände den jeweils vorgegebenen Grenzwert überschreitet.

3. Vorrichtung (1) nach Anspruch 1 oder 2, wobei die Steuereinrichtung (50) dazu ausgelegt ist, einen Isolationswiderstand zwischen dem ersten Messanschluss (12) der ersten Gruppe (10) von Kontaktelementen und dem zweiten Messanschluss (22) der zweiten Gruppe (20) von Kontaktelementen zu ermitteln, und den Ladevorgang freizugeben, falls der ermittele Isolationswiderstand einen vorgegebenen Grenzwert überschreitet.

4. Vorrichtung (1) nach einem der Ansprüche 1 bis 3, wobei die Steuereinrichtung (50) dazu ausgelegt ist, einen Ladestrom während des Ladevorgangs zu überwachen und den Ladevorgang zu unterbrechen, falls der Ladestrom einen vorgegebenen minimalen Ladestrom unterschreitet.

5. Vorrichtung (1) nach einem der Ansprüche 1 bis 4, mit einer Schutzeinrichtung (40), die dazu ausgelegt ist, ein Bereich zwischen dem Elektrofahrzeug und der Ladestation, in welchen die erste Gruppe (10) von Kontaktelementen und die zweite Gruppe (20) von Kontaktelementen angeordnet sind zu umschließen, wenn die erste und zweite Gruppe (10, 20) von Kontaktelementen mit der ersten und zweiten Kontaktfläche (101, 102) des Ladepunkts kontaktiert sind.

6. Vorrichtung (1) nach Anspruch 5, mit einer Kontrolleinrichtung (41), die dazu ausgelegt ist, den Ladevorgang nur dann freizugeben, falls die Schutzeinrichtung (40) den Bereich zwischen dem Elektrofahrzeug und der Ladestation, in welchen die erste Gruppe (10) von Kontaktelementen und die zweite Gruppe (20) von Kontaktelementen angeordnet sind umschlossen hat.

7. Vorrichtung (1) nach einem der Ansprüche 1 bis 6, mit einer Kommunikationseinrichtung (51), die dazu ausgelegt ist, eine Kommunikationsverbindung (51) zwischen dem Elektrofahrzeug und der Ladestation über die Kontaktelemente des ersten Messanschlusses (12) und des zweiten Messanschlusses (22) bereitzustellen

8. System zum Aufladen eines Elektrofahrzeugs, mit:
einer Vorrichtung (1) zum Kontaktieren eines Elektrofahrzeugs nach einem der Ansprüche 1 bis 7; und
einer Ladestation zum Aufladen des Elektrofahrzeugs, mit:
einer ersten Kontaktfläche (101), die dazu ausgelegt ist, mit den ersten Leistungsanschluss (11) der Vorrichtung (1) zum Kontaktieren eines Elektrofahrzeugs elektrisch verbunden zu werden, und
einer zweiten Kontaktfläche (102), die dazu ausgelegt ist, mit einem zweiten Leistungsanschluss (21) der Vorrichtung (1) zum Kontaktieren eines Elektrofahrzeugs elektrisch verbunden zu werden,
wobei die zweite Kontaktfläche (102) konzentrisch um die erste Kontaktfläche (101) angeordnet ist, und wobei zwischen der ersten Kontaktfläche (101) und der zweiten Kontaktfläche (102) ein elektrisch isolierender Bereich (103) angeordnet ist.

9. Verfahren zum Kontaktieren eines Elektrofahrzeugs mit einer Ladestation, wobei das Elektrofahrzeug eine Vorrichtung (1) zum Kontaktieren des Elektrofahrzeugs mit der Ladestation nach einem der Ansprüche 1 bis 7 umfasst, und wobei das Verfahren umfasst:
Kontaktieren (S1) der ersten Gruppe (10) von Kontaktelementen mit einer ersten Kontaktfläche (101) der Ladestation;
Kontaktieren (S2) der zweiten Gruppe (20) von Kontaktelementen mit einer zweiten Kontaktfläche (102) der Ladestation;
Überprüfen (S3) von Übergangswiderständen zwischen dem ersten Leistungsanschluss (11) und dem ersten Messanschluss (12), zwischen dem zweiten Leistungsanschluss (21) und dem zweiten Messanschluss (22) und zwischen dem Schutzleiteranschluss (23) und dem zweiten Messanschluss (22); und
Freigeben (S4) eines Ladevorgang, falls die überprüften Übergangswiderstand, jeweils einen vorgegebenen Grenzwert unterschreiten.

## Claims

1. Apparatus (1) for contact-connecting an electric vehicle to a charging station, having:
a first group (10) of contact elements, the first group (10) of contact elements comprising a first power connection (11) and a first measurement connection (12);
a second group (20) of contact elements, the second group (20) of contact elements comprising a second power connection (21), a protective earth connection (23) and a second measurement connection (22); and
a positioning device (30) designed to contact-connect the contact elements of the first group (10) of contact elements to a first contact pad (101) of a charging point of the charging station and to contact-connect the contact elements of the second group (20) of contact elements to a second contact pad (102) of the charging point of the charging station,
the contact elements for the first measurement connection (12) and the second measurement connection (22) being arranged set back from the contact elements for the first power connection (11), the second power connection (22) and the protective earth connection (23),
the apparatus (1) further comprising a control device (50) designed to determine a first contact resistance between the first power connection (11) and the first measurement connection (12) of the first group (10) of contact elements when the first group (10) of contact elements is contact-connected to the first contact pad (101) of the charging point,
to determine a second contact resistance between the second power connection (21) and the second measurement connection (22) of the second group (20) of contact elements and to determine a third contact resistance between the protective earth connection (23) and the second measurement connection (22) of the second group (20) of contact elements when the second group (20) of contact elements is contact-connected to the second contact pad (102) of the charging point, and
to enable a charging process if the first contact resistance, the second contact resistance and the third contact resistance each fall below a predetermined limit value.

2. Apparatus (1) according to Claim 1, wherein the control device (50) is designed to check the contact resistances during a charging process and to interrupt the charging process if at least one of the determined contact resistances exceeds the respectively predetermined limit value.

3. Apparatus (1) according to Claim 1 or 2, wherein the control device (50) is designed to determine an insulation resistance between the first measurement connection (12) of the first group (10) of contact elements and the second measurement connection (22) of the second group (20) of contact elements, and to enable the charging process if the determined insulation resistance exceeds a predetermined limit value.

4. Apparatus (1) according to any one of Claims 1 to 3, wherein the control device (50) is designed to monitor a charging current during the charging process and to interrupt the charging process if the charging current falls below a predetermined minimum charging current.

5. Apparatus (1) according to any one of Claims 1 to 4, having a protective device (40) designed to enclose an area between the electric vehicle and the charging station, in which the first group (10) of contact elements and the second group (20) of contact elements are arranged, if the first and second group (10, 20) of contact elements are contact-connected to the first and second contact pad (101, 102) of the charging point.

6. Apparatus (1) according to Claim 5, having a control device (41) designed to enable the charging process only if the protective device (40) has enclosed the area between the electric vehicle and the charging station, in which the first group (10) of contact elements and the second group (20) of contact elements are arranged.

7. Apparatus (1) according to any one of Claims 1 to 6, having a communication device (51) designed to provide a communication connection (51) between the electric vehicle and the charging station via the contact elements of the first measurement connection (12) and the second measurement connection (22).

8. System for charging an electric vehicle, having:
an apparatus (1) for contact-connecting an electric vehicle according to any one of Claims 1 to 7; and
a charging station for charging the electric vehicle, having:
a first contact pad (101) designed to be electrically connected to the first power connection (11) of the apparatus (1) for contact-connecting an electric vehicle, and
a second contact pad (102) designed to be electrically connected to a second power connection (21) of the apparatus (1) for contact-connecting an electric vehicle,
the second contact pad (102) being arranged concentrically around the first contact pad (101), and an electrically insulating area (103) being arranged between the first contact pad (101) and the second contact pad (102).

9. Method for contact-connecting an electric vehicle to a charging station, the electric vehicle comprising an apparatus (1) for contact-connecting the electric vehicle to the charging station according to any one of Claims 1 to 7, and the method comprising:
contact-connecting (S1) the first group (10) of contact elements to a first contact pad (101) of the charging station;
contact-connecting (S2) the second group (20) of contact elements to a second contact pad (102) of the charging station;
checking (S3) contact resistances between the first power connection (11) and the first measurement connection (12), between the second power connection (21) and the second measurement connection (22), and between the protective earth connection (23) and the second measurement connection (22); and
enabling (S4) a charging process if the checked contact resistances respectively fall below a predetermined limit value.

## Revendications

1. Dispositif (1) de connexion par contact d'un véhicule électrique à une borne de recharge, comprenant :
un premier groupe (10) d'éléments de contact, le premier groupe (10) d'éléments de contact comprenant une première connexion de puissance (11) et une première connexion de mesure (12) ;
un deuxième groupe (20) d'éléments de contact, le deuxième groupe (20) d'éléments de contact comprenant une deuxième connexion de puissance (21), une connexion de conducteur de protection (23) et une deuxième connexion de mesure (22) ; et
un dispositif de positionnement (30) qui est conçu pour connecter par contact les éléments de contact du premier groupe (10) d'éléments de contact à un premier plot de contact (101) d'un point de recharge de la borne de recharge et pour connecter par contact les éléments de contact du deuxième groupe (20) d'éléments de contact à un deuxième plot de contact (102) du point de recharge de la borne de recharge,
les éléments de contact destinés à la première connexion de mesure (12) et la deuxième connexion de mesure (22) étant disposés en retrait par rapport aux éléments de contact pour la première connexion de puissance (11), la deuxième connexion de puissance (22) et la connexion de conducteur de protection (23),
le dispositif (1) comprenant en outre un dispositif de commande (50) qui est conçu pour déterminer une première résistance de contact entre la première connexion de puissance (11) et la première connexion de mesure (12) du premier groupe (10) d'éléments de contact lorsque le premier groupe (10) d'éléments de contact est connecté par contact au premier plot de contact (101) du point de recharge,
pour déterminer une deuxième résistance de contact entre la deuxième connexion de puissance (21) et la deuxième connexion de mesure (22) du deuxième groupe (20) d'éléments de contact et pour déterminer une troisième résistance de contact entre la connexion de conducteur de protection (23) et la deuxième connexion de mesure (22) du deuxième groupe (20) d'éléments de contact lorsque le deuxième groupe (20) d'éléments de contact est connecté par contact au deuxième plot de contact (102) du point de recharge, et
pour déclencher un processus de recharge dans le cas où la première résistance de contact, la deuxième résistance de contact et la troisième résistance de contact sont respectivement inférieures à une valeur limite prédéterminée.

2. Dispositif (1) selon la revendication 1, **caractérisé en ce que** le dispositif de commande (50) est conçu pour vérifier les résistances de contact pendant un processus de recharge et pour interrompre le processus de recharge dans le cas où au moins l'une des résistances de contact déterminées dépasse respectivement la valeur limite prédéterminée.

3. Dispositif (1) selon la revendication 1 ou 2, **caractérisé en ce que** le dispositif de commande (50) est conçu pour déterminer une résistance d'isolement entre la première connexion de mesure (12) du premier groupe (10) d'éléments de contact et la deuxième connexion de mesure (22) du deuxième groupe (20) d'éléments de contact, et pour déclencher le processus de recharge dans le cas où la résistance d'isolement déterminée dépasse une valeur limite prédéterminée.

4. Dispositif (1) selon l'une quelconque des revendications 1 à 3, **caractérisé en ce que** le dispositif de commande (50) est conçu pour surveiller un courant de recharge pendant le processus de recharge et pour interrompre le processus de recharge dans le cas où le courant de recharge est inférieur à un courant de recharge minimal prédéterminé.

5. Dispositif (1) selon l'une quelconque des revendications 1 à 4, comprenant un dispositif de protection (40) qui est conçu pour entourer une zone, située entre le véhicule électrique et la borne de recharge, dans laquelle sont disposés le premier groupe (10) d'éléments de contact et le deuxième groupe (20) d'éléments de contact, lorsque les premier et deuxième groupes (10, 20) d'éléments de contact sont connectés par contact aux premier et deuxième plots de contact (101, 102) du point de recharge.

6. Dispositif (1) selon la revendication 5, comprenant un dispositif de contrôle (41) qui est conçu pour déclencher le processus de recharge uniquement dans le cas où le dispositif de protection (40) a entouré la zone, située entre le véhicule électrique et la borne de recharge, dans laquelle sont disposés le premier groupe (10) d'éléments de contact et le deuxième groupe (20) d'éléments de contact.

7. Dispositif (1) selon l'une quelconque des revendications 1 à 6, comprenant un dispositif de communication (51) qui est conçu pour fournir une connexion de communication (51) entre le véhicule électrique et la borne de recharge par l'intermédiaire des éléments de contact de la première connexion de mesure (12) et de la deuxième connexion de mesure (22).

8. Système de recharge d'un véhicule électrique, comprenant :
un dispositif (1) de connexion par contact d'un véhicule électrique selon l'une quelconque des revendications 1 à 7 ; et
une borne de recharge pour recharger le véhicule électrique, comprenant :
un premier plot de contact (101) qui est conçu pour être relié électriquement à la première connexion de puissance (11) du dispositif (1) de connexion par contact d'un véhicule électrique, et
un deuxième plot de contact (102) qui est conçu pour être relié électriquement à une deuxième connexion de puissance (21) du dispositif (1) de connexion par contact d'un véhicule électrique,
dans lequel le deuxième plot de contact (102) est disposé concentriquement autour du premier plot de contact (101), et dans lequel une zone électriquement isolante (103) est disposée entre le premier plot de contact (101) et le deuxième plot de contact (102).

9. Procédé de connexion par contact d'un véhicule électrique à une borne de recharge, dans lequel le véhicule électrique comprend un dispositif (1) de connexion par contact du véhicule électrique à la borne de recharge selon l'une quelconque des revendications 1 à 7, et le procédé comprenant :
la connexion par contact (S1) du premier groupe (10) d'éléments de contact à un premier plot de contact (101) de la borne de recharge ;
la connexion par contact (S2) du deuxième groupe (20) d'éléments de contact à un deuxième plot de contact (102) de la borne de recharge ;
la vérification (S3) de résistances de contact entre la première connexion de puissance (11) et la première connexion de mesure (12), entre la deuxième connexion de puissance (21) et la deuxième connexion de mesure (22), et entre la connexion de conducteur de protection (23) et la deuxième connexion de mesure (22) ; et
le déclenchement (S4) d'un processus de recharge dans le cas où les résistances de contact vérifiées sont respectivement inférieures à une valeur limite prédéterminée.
